(19) Europäisches Patentamt
European Patent Office
Office européen des brevets

(11) Veröffentlichungsnummer : **0 148 462**
**B1**

(12) **EUROPÄISCHE PATENTSCHRIFT**

(45) Veröffentlichungstag der Patentschrift : **08.07.87**

(51) Int. Cl.⁴ : **C 08 G 18/08**, C 08 J 3/08, C 08 L 75/02

(21) Anmeldenummer : **84115611.0**

(22) Anmeldetag : **17.12.84**

(54) **Verfahren zur in situ-Herstellung von Harnstoffgruppen-enthaltenden Diisocyanaten in Polyolen, dem Verfahren entsprechende Dispersionen oder Lösungen sowie ihre Verwendung.**

(30) Priorität : **28.12.83 DE 3347247**

(43) Veröffentlichungstag der Anmeldung : **17.07.85 Patentblatt 85/29**

(45) Bekanntmachung des Hinweises auf die Patenterteilung : **08.07.87 Patentblatt 87/28**

(84) Benannte Vertragsstaaten : **BE DE FR GB IT NL**

(56) Entgegenhaltungen :
**DE-A- 2 902 469**
**US-A- 3 271 346**
**US-A- 3 649 600**

(73) Patentinhaber : **BAYER AG**
**Konzernverwaltung RP Patentabteilung**
**D-5090 Leverkusen 1 Bayerwerk (DE)**

(72) Erfinder : **Grögler, Gerhard, Dr.**
**von Diergardt-Strasse 46**
**D-5090 Leverkusen 1 (DE)**
Erfinder : **Kopp, Richard, Dr.**
**Wolfskaul 12**
**D-5000 Köln 80 (DE)**
Erfinder : **Hess, Heinrich, Dr.**
**Auf der Griesse 46**
**D-5090 Leverkusen 1 (DE)**

**EP 0 148 462 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur in situ-Herstellung von Dispersionen oder Lösungen von Harnstoffgruppen-enthaltenden aromatischen Polyisocyanaten durch Umsetzung von aromatischen Di- und/oder Polyisocyanaten mit vorzugsweise unterschiedlicher Reaktivität der NCO-Gruppen in höhermolekularen Polyolen, mit 0,15 bis 0,4 Mol Wasser pro NCO-Äquivalent in Gegenwart von die NCO/Wasser-Reaktion beschleunigenden Katalysatoren, vorzugsweise aus der Reihe der Peralkylamino-alkylether, Peralkylamino-polyalkylenether und/oder Peralkyl-polyalkylen-polyamine, bei niedrigen Temperaturen. Beansprucht werden auch die metastabilen Lösungen bzw. Dispersionen nach dem beanspruchten Verfahren, sowie ihre Verwendung unter gegebenenfalls weiterem Zusatz von höher- und niedermolekularen Verbindungen mit Hydroxyl-, Amino- oder Hydrazidgruppierungen und gegebenenfalls Zusatz von weiteren Polyisocyanaten in polyurethanbildenden Verhältnissen, zur Herstellung von Polyurethanen.

Harnstoffgruppen-enthaltende Diisocyanate zeichnen sich im allgemeinen durch einen relativ hohen Schmelzpunkt aus. Sie finden wegen ihres geringen Dampfdrucks und wegen des Vorhandenseins der Harnstoffgruppen als Ausgangsmaterial zur Herstellung von hochwertigen Polyurethan/Polyharnstoffkunststoffen bevorzugte Anwendung. Üblicherweise werden diese Diisocyanate durch Umsetzung von 2 Mol Diisocyanat mit 1 Mol Wasser in einem inerten Lösungsmittel hergestellt, wobei zur Erzielung eines definierten Reaktionsverlaufs der Einsatz von Diisocyanaten mit zwei unterschiedlich reaktiven Gruppen bevorzugt wird. So wird in der FR-PS 1 103 329 die Herstellung von Bis-(3-isocyanato-4-alkoxy-, -alkyl- oder -chlor-phenyl)-harnstoffen durch Umsetzung der Reaktanden im molaren Verhältnis (Diisocyanat zu Wasser = 2 : 1) in einem Lösungsmittel beschrieben, wobei das Lösungsmittel keine reaktiven Wasserstoffatome, z. B. Hydroxylgruppen, enthalten darf. Als Lösungsmittel werden demnach bevorzugt Ethylacetat, Diethylether oder Aceton eingesetzt.

Die US-PS 3 906 019 beschreibt ein Verfahren zur Herstellung von monomerem Di-(isocyanatotolyl)-harnstoff, wobei die Reaktion im Überschuß eines der beiden nicht mischbaren Reaktanden (Toluylendiisocyanat, vorzugsweise aber Wasser) bei 20 bis 40 °C durchgeführt wird. Der in beiden Ausgangsstoffen unlösliche Harnstoff scheidet sich in ca. 60 bis 85 %iger Ausbeute in überwiegend monomerer Form ab und muß dann abgetrennt und gereinigt werden. Als Katalysatoren für die geschilderte Umsetzung können Lewis-Säuren oder Lewis-Basen eingesetzt werden ; bevorzugt wird Pyridin.

Alle diese Verfahren werden in Lösungsmitteln durchgeführt. In diesen Lösungsmitteln müssen die Diisocyanate gut und das zugesetzte Wasser zumindest teilweise löslich sein. Es darf keine polymerisierende Wirkung auf das Isocyanat ausüben und muß frei von gegenüber Isocyanatgruppen reagierenden funktionellen Gruppen sein. Die Harnstoffdiisocyanate fallen als schwer lösliche Verbindungen aus und werden durch Filtration isoliert. Für eine weitere Verarbeitung dieser Harnstoffisocyanate für Polyurethan-Reaktionen ist es notwendig, die durch Filtrieren gewonnenen und im Vakuum von Lösungsmitteln befreiten Harnstoffisocyanate durch entsprechende Mahlvorgänge in feinverteilte Form zu bringen. Infolge des hohen Schmelzpunktes und der Schwerlöslichkeit dieser Isocyanatharnstoffe werden sonst bei der Umsetzung oftmals inhomogene Produkte erhalten.

Nach der DE-A-29 02 469 werden Suspensionen von (Poly)Harnstoff-diisocyanaten in Isocyanat-prepolymeren hergestellt, indem 1 Mol aromatisches Diisocyanat im NCO-Prepolymer gelöst und mit etwa 0,4 bis 0,8 Mol Wasser zur Reaktion gebracht werden. Hierbei werden sowohl zur Herstellung der NCO-Prepolymeren als auch zur Herstellung der (Poly)Harnstoffdiisocyanate organische Diisocyanate mit unterschiedlich reaktiven NCO-Gruppen eingesetzt.

Bisher ist noch kein Verfahren bekannt geworden, bei dem in einem gegenüber NCO reaktiven organischen Lösungsmittel, wie z. B. langkettigen Hydroxylpolyethern oder Hydroxypolyestern, ein Harnstoffgruppen-enthaltendes Polyisocyanat durch Reaktion von organischen Polyisocyanaten mit Wasser direkt hergestellt wurde. Dies erscheint nach dem Stand der Technik auch wenig aussichtsreich, da im allgemeinen die Hydroxylgruppe des Polyethers oder Polyesters gegenüber NCO-Gruppen in etwa die gleiche Reaktivität wie Wasser besitzen. Man würde also erwarten, daß bei der Umsetzung eines Polyisocyanates mit Wasser in einem Polyether oder Polyester die NCO-Gruppen in etwa gleichem Maß mit dem Wasser und den OH-Gruppen des Polyols reagieren.

Die getrennte Herstellung von Harnstoff-diisocyanaten, ihre Isolierung und Reinigung sowie die nachträgliche Dispergierung oder Auflösung der Harnstoff-diisocyanate in höhermolekularen Polyolen, wie sie zum Aufbau von Polyurethanen benutzt werden, ist technisch aufwendig. Aufgabe der Erfindung war es nun, aus technisch leicht zugänglichen, aromatischen Diisocyanaten in einer einfachen und wirtschaftlichen Durchführungsform Harnstoffdiisocyanate direkt in den höhermolekularen Polyolen aufzubauen, um diese Harnstoffdiisocyanat/Polyol-Dispersionen bzw. -Lösungen direkt zum Aufbau von Polyurethanen verwenden zu können.

Es wurde nun gefunden, daß sich Dispersionen oder Lösungen von Harnstoffgruppen-enthaltenden aromatischen Diisocyanaten in höhermolekularen Polyolen durch in situ-Herstellung aus den aromatischen Polyisocyanaten und Wasser in Gegenwart von bestimmten Katalysatoren bei relativ niedrigen Temperaturen aufbauen lassen. Die Verfahrensprodukte sind bei Raumtemperatur oder wenig erhöhten Temperaturen über längere Zeit, bis zu mehreren Tagen, lagerstabil und können danach direkt

Verwendung zum Aufbau von Polyurethan-, Polyurethan(harnstoff)en, gegebenenfalls unter Zusatz weiterer Polyisocyanate und/oder weiterer, reaktive Wasserstoffatome aufweisender nieder und/oder höhermolekularer Verbindungen finden. Überraschenderweise konnte die Umsetzung der aromatischen Polyisocyanate mit Wasser im höhermolekularen Polyol durch die Gegenwart der speziellen Katalysatoren so gesteuert werden, daß die NCO/Wasser-Reaktion spezifisch unter Harnstoffdiisocyanatbildung und deutlich vor der NCO/Polyol-Reaktion abläuft. Nach Bildung der Polyharnstoffisocyanate ist deren Weiterreaktion mit Polyolen sehr stark verzögert, so daß die Dispersionen bzw. Lösungen bei Raumtemperatur oder wenig erhöhter Temperatur als metastabile Systeme zur Verwendung zur Polyurethanherstellung (bei erhöhten Temperaturen) bequem gehandhabt werden können.

Gegenstand der vorliegenden Erfindung ist somit ein Verfahren zur in situ-Herstellung von Dispersionen oder Lösungen von Harnstoffgruppen-enthaltenden aromatischen Polyisocyanaten durch Umsetzung von aromatischen Diisocyanaten mit Wasser in Lösungsmitteln, dadurch gekennzeichnet, daß man

a) aromatische Di- und/oder Polyisocyanate, vorzugsweise Diisocyanate mit unterschiedlicher Reaktivität der NCO-Gruppen, in

b) höhermolekularen, flüssigen oder unter 50 °C schmelzenden, zwei- oder mehrwertigen Polyolen mit Molekulargewichten von 400 bis 10 000, vorzugsweise 600 bis 6 000, vorzugsweise in flüssigen Polyetherpolyolen mit überwiegend sekundären Hydroxylgruppen, mit

c) 0,15 bis 0,40, bevorzugt 0,22 bis 0,28 Mol Wasser, bezogen auf Gesamt-NCO-Äquivalente in a), in Gegenwart von

d) 0,1 bis 2,5 Gew.-%, vorzugsweise 0,4 bis 1,2 Gew.-%, bezogen auf aromatisches Polyisocyanat an die NCO/Wasser-Reaktion stärker als die NCO-Hydroxyl-Reaktion beschleunigenden Katalysatoren, aus der Reihe der Peralkylamino-alkylether, Peralkylamino-polyalkylenether und/oder Peralkyl-polyalkylenpolyamine

bei Temperaturen bis 50 °C, bis zur Beendigung der $CO_2$-Abspaltung umsetzt.

Die bevorzugten Mengenverhältnisse sind 0,1 bis 40 Gew.-Teile a) pro 100 Gew.-Teile b), noch bevorzugter 5-25 Gew.-Teile a) und insbesondere 7 bis 20 Gew.-Teile a) pro 100 Gew.-Teile b).

Ein weiterer Gegenstand der Erfindung sind die durch die in situ-Reaktion nach dem erfindungsgemäßen Verfahren hergestellte Dispersionen oder Lösungen von Harnstoffgruppen-enthaltenden aromatischen Polyisocyanaten in höhermolekularen Polyolen mit einem Gehalt an freien NCO-Gruppen im Gemisch von 0,1 bis 10 %, vorzugsweise 1-5 % NCO.

Ein weiterer Gegenstand der Erfindung ist die Verwendung der durch in situ-Herstellung nach den erfindungsgemäßen Verfahren zugänglichen Dispersionen oder Lösungen von Harnstoffgruppen-enthaltenden aromatischen Polyisocyanaten in höhermolekularen, flüssigen oder unter 50 °C schmelzenden Polyolen, gegebenenfalls unter weiterem Zusatz von niedermolekularen und/oder höhermolekularen, gegenüber Isocyanat reaktive Gruppen mit aktivem Wasserstoff, insbesondere Hydroxyl-, primäre und/oder sekundäre Amino- und/oder Hydrazidgruppen aufweisenden, vorzugsweise di- und/oder höherfunktionellen Verbindungen und gegebenenfalls unter Zusatz von weiteren Polyisocyanaten, in Polyurethan-bildenden Verhältnissen, vorzugsweise in Verhältnissen von NCO zu Gruppen mit reaktiven Wasserstoffen zwischen 0,7 : 1 bis 1,3 : 1, insbesondere 0,9 : 1 bis 1,15 : 1, zur Herstellung von Polyurethanharnstoffen.

Es war überraschend, daß nach dem erfindungsgemäßen Verfahren in Polyolen eine Umsetzung zu Harnstoffdiisocyanaten in so bevorzugter Weise erfolgt, wenn man die erfindungsgemäßen Katalysatoren der NCO/Wasser-Reaktion mitverwendet, da dieselben Katalysatoren beim Versuch einer Umsetzung in Lösungsmitteln, z. B. Aceton, völlig andere Produkte, offenbar oligomere Harnstoffisocyanate oder Polyharnstoffe ergeben (siehe Vergleichsbeispiel). Die Katalysatoren, welche erfindungsgemäß zur Herstellung der Dispersionen bzw. Lösungen von Harnstoffgruppen-enthaltenden aromatischen Diisocyanaten eingesetzt werden, sind an sich bekannte Katalysatoren für die Polyurethanchemie. Sie werden in großen Mengen bei der Herstellung von Polyurethan-Weichschaumstoffen eingesetzt. Sie dienen hierbei dazu, die schaumstoffbildende Wasser/NCO-Reaktion mit den anderen, die Polyurethan-Matrix aufbauenden Reaktionen zwischen Isocyanaten und Polyolen zu koordinieren.

Für den Einsatz im Sinne der Erfindung sind solche Katalysatoren geeignet, die in einem nach J. Cellular Plastics, 1965, Seite 76 bis 84 durchgeführten Test ein Verhältnis der Geschwindigkeitskonstanten der Wasserreaktion zur Alkoholreaktion ($k_{H2O}$ : $k_{ROH}$) von mindestens 1,5, vorzugsweise mindestens 2,0 zeigen.

Solche Katalysatoren werden z. B. in folgenden Patentschriften beschrieben : FR-PS 1 426 198, US-PS 3 645 925, DE-A-2 139 317 und 1 804 361.

Bevorzugte Katalysatoren sind Peralkylamino-alkylether, z. B. Bis-(dimethylaminoethyl)-ether, Bis-(morpholinoethyl)-ether, 2-(Dimethylaminoethyl-3-dimethylaminopropyl)-ether, Bis-[2-(N,N-dimethylamino)-1-methylethyl]-ether ; 2-(N,N-dimethylamino)ethyl-2-(N,N-dimethylamino)-1-methylethyl-ether, Bis-[2-(N,N-diethylamino)ethyl]-ether ; Methyl-2-[N,N-dimethylamino)-ethylether ; Bis-[3-(N,N-dimethylamino)-propyl]-ether. Peralkylamino-polyalkylenether wie z. B. $(CH_3)_2N \cdot CH_2CH_2 \cdot O \cdot CH_2CH_2 \cdot O \cdot CH_2CH_2 \cdot O \cdot CH_2CH_2N(CH_3)_2$ ; $(C_2H_5)_2 \cdot N \cdot (CH_2)_2\text{-}O\text{-}(CH_2)_2 \cdot O \cdot (CH_2)_2 \cdot O(CH_2)_2 \cdot$

$N(C_2H_5)_2$ und/oder Peralkylpolyalkylen-polyamine wie N-Pentamethyl-diethylentriamin, N-Hexamethyltriethylentetramin, N-Heptamethyltetraethylen-pentamin. Weiter geeignete Verbindungen sind z. B. der [1,3-Bis-(dimethylamino)-propyl-2]-2-dimethylaminoethyl-ether, N-Methyl-morpholin, N-Ethylmorpholin, N,N,N',N'-Tetramethyl-1,3-butandiamin.

Diese Katalysatoren werden, bezogen auf das aromatische Diisocyanat in Konzentrationen von 0,1 bis 2,5 Gew.-% eingesetzt, besonders bevorzugt sind Konzentrationen von etwa 0,4 bis 1,2 Gew.-%.

Für das erfindungsgemäße Verfahren sind als aromatische Polyisocyanate besonders alle löslichen aromatischen Diisocyanate mit NCO-Gruppen unterschiedlicher Reaktivität geeignet. Diese sind beispielsweise solche, welche neben einer freien, d. h. sterisch ungehinderten, aromatisch gebundenen Isocyanatgruppe eine weitere, aromatisch gebundene Isocyanatgruppe aufweisen, welche durch mindestens einen Substituenten in o-Stellung sterisch gehindert ist. Derartige Substituenten, die zu einer sterischen Hinderung der Isocyanatgruppe führen können, sind insbesondere $C_1$-$C_8$-Alkyl-, $C_6$-$C_{10}$-Aryl-, $C_1$-$C_8$-Alkoxy-, $C_1$-$C_8$-Alkoxycarbonyl-, Chlor-, Brom- oder Cyano-Gruppen. Desweiteren ist eine sterische Hinderung der aromatisch gebundenen Isocyanatgruppen dann gegeben, wenn das Grundgerüst des Diisocyanats ein gegebenenfalls über Brückenglieder wie Alkylen-, Ether-, Sulfoxid- oder Sulfongruppen verknüpftes System mehrerer aromatischer Ringe darstellt und die (sterisch gehinderte) Isocyanatgruppe in ortho-Stellung zu dem zwei aromatische Ringe verknüpfenden Brückenglied angeordnet ist.

Besonders bevorzugte aromatische Diisocyanate sind beispielsweise solche der Formeln (I) und (II)

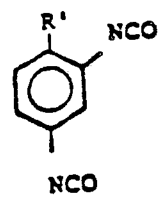

(I)

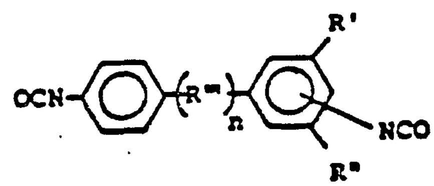

(II)

worin

R' und R'' für gleiche oder verschiedene Reste stehen und eine die sterische Hinderung der Isocyanatgruppe bewirkende Gruppe der oben beispielhaft genannten Art darstellen, wobei bei den Produkten der Formel (II) einer der Reste R' bzw. R'' auch für Wasserstoff stehen kann, bzw. wobei in der Formel (II) auch beide R' und R'' für Wasserstoff stehen können, falls die Isocyanatgruppe ortho-ständig zur Brücke R''' bzw. im Falle von n = 0 ortho-ständig zum linken aromatischen Rest angeordnet ist ;

R''' für eine die aromatischen Ringe verknüpfende Brücke der oben beispielhaft genannten Art und

n für 0 oder 1 steht.

Es ist auch möglich, beim erfindungsgemäßen Verfahren Gemische aromatischer Diisocyanate einzusetzen, in welchen aromatische Diisocyanate mit Isocyanatgruppen gleicher Reaktivität wie beispielsweise 4,4'-Diisocyanatodiphenylmethan oder 2,6-Diisocyanatotoluol vorliegen, falls der Anteil derartiger Diisocyanate mit Isocyanatgruppen gleicher Reaktivität eine obere Grenze von 50, vorzugsweise von 40 Gew.-% bezogen auf das Gesamtgemisch nicht übersteigt.

Zu den besonders bevorzugten, für das erfindungsgemäße Verfahren geeigneten Diisocyanaten gehören z. B. 2,4-Diisocyanatotoluol, gegebenenfalls im Gemisch mit bis zu 50 Gew.-% bezogen auf Gesamtgemisch an 2,6-Diisocyanatotoluol, 2,4'-Diisocyanatodiphenylmethan, gegebenenfalls im Gemisch mit bis zu 50 Gew.-% bezogen auf Gesamtgemisch an 4,4'-Diisocyanatodiphenylmethan. Weiterhin geeignet sind z. B. 2,4'-Diisocyanatodiphenylpropan, 2,4'-Diisocyanatodiphenylether, 2,4'-Diisocyanatodiphenylsulfon, 2,4'-Diisocyanatodiphenylsulfodioxid, 3-Methyl-4,4'-diisocyanatodiphenylmethan, 3-Ethyl-4,4'-diisocyanatodiphenylmethan, 3-Isopropyl-4,4'-diisocyanatodiphenylmethan, 3,5-Dimethyl-4,4'-diisocyanatodiphenylmethan, 3,5-Diethyl-4,4'-diisocyanatodiphenylmethan oder 3,5-Diisopropyl-4,4'-diisocyanatodiphenylmethan, 3-Carboxymethyl-4,4'-diisocyanatodiphenylmethan, 3-Carboxyethyl-4,4'-diisocyanatodiphenylmethan.

Im erfindungsgemäßen Verfahren zur Herstellung der Harnstoffdiisocyanate geeignete höhermolekulare, 2- oder mehrwertige Polyole sind vorzugsweise 2 bis 4, insbesondere etwa 2 Hydroxylgruppen aufweisende Polyester, Polyether, Polythioether, Polyacetale, Polycarbonate oder Polyesteramide des Molekulargewichtsbereichs 400 bis 10 000, vorzugsweise 600 bis 6 000, wie sie für die Herstellung von homogenen oder geschäumten Polyurethanen an sich bekannt sind. Vorzugsweise gelangen bei Raumtemperatur flüssige oder niedrigschmelzende (< 50 °C) Polyether- bzw. Polyesterpolyole zum Einsatz. Erfindungsgemäß werden besonders zwei oder mehrere Hydroxylgruppen aufweisende, flüssige Polyether der an sich bekannten Art verwendet. Sie werden beispielsweise durch Polymerisation von Epoxiden wie Ethylenoxid, Propylenoxid, Butylenoxid, Styroloxid oder Epichlorhydrin sowie von Tetrahydrofuran mit sich selbst, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole oder Amine hergestellt. Vielfach sind solche Polyether bevorzugt, die überwiegend sekundäre Hydroxylgruppen aufweisen. Polyether, welche Anteile an Ethylenoxidgruppen enthalten, sind jedoch als Polyole in der anschließenden Verwendung der Gemische zum Aufbau von Polyurethanen reaktiver, auch sind Polyether mit höherem Gehalt an Ethylenoxid bessere Lösungsmittel für die gebildeten Harnstoffdiisocyanate. Diese können sich gegebenenfalls sogar in entsprechenden Polyethern vollständig auflösen.

Auch durch Vinylpolymerisate modifizierte Ether, wie sie z. B. durch Polymerisation von Styrol und Acrylnitril in Gegenwart von Polyethern entstehen, sind geeignet. Die als höhermolekulare Polyole b) in Frage kommenden, Hydroxylgruppen aufweisenden, flüssigen oder niedrigschmelzenden Polyester sind die bekannten Umsetzungsprodukte von mehrwertigen, vorzugsweise zweiwertigen Carbonsäuren, Carbonsäureanhydriden oder Carbonsäureestern mit zwei und/oder mehrwertigen Polyolen. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Beispiele hierfür sind Bernsteinsäure, Adipinsäure, Sebacinsäure, Phthalsäure, Isophthalsäure, Phthalsäureanhydrid, Trimellitsäure, Tetrachlorphthalsäureanhydrid, Glutarsäureanhydrid, Maleinsäureanhydrid, Terephthalsäuredimethylester und Terephthalsäure-bis-glykolester. Als mehrwertige Alkohole kommen z. B. Ethylenglykol, Propandiol-1,2 und -1,3, Butandiol-1,3, -1,4 und -2,3, Hexandiol-1,6, Neopentylglykol, 2-Methyl-1,3-propandiol, Trimethylolpropan, Diethylenglykol, Dipropylenglykol, Dibutylenglykol und andere mehrwertige Alkohole in Frage. Zur Herstellung flüssiger Polyester werden bevorzugt Mischungen der Ausgangskomponenten verwendet. Auch Polyester aus Lactonen z. B. ε-Caprolacton oder Hydroxycarbonsäuren sind einsetzbar, ebenso Hydroxylgruppen aufweisende Polycarbonate oder bereits Urethan- oder Harnstoffgruppen enthaltende Polyhydroxylverbindungen, sowie gegebenenfalls modifizierte natürliche Polyole wie Rizinusöl. Vertreter dieser erfindungsgemäß zu verwendenden Verbindungen sind in High Polymers, Vol. XVI, « Polyurethanes, Chemistry and Technology », verfaßt von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie im Kunststoff-Handbuch, Band VII, Vieweg-Höchtlen, Carl-Hanser-Verlag, München, 1966, z. B. auf den Seiten 45 bis 71 beschrieben.

Selbstverständlich können Mischungen der obengenannten Verbindungen, z. B. Mischungen von Polyethern und Polyestern, eingesetzt werden.

Die eingesetzte Menge Wasser zur Bildung der Harnstoffdiisocyanate aus aromatischen Diisocyanate beträgt theoretisch 0,25 Mol Wasser bezogen auf die Gesamt-NCO-Äquivalente in den Polyisocyanaten a). Die eingesetzte Menge Wasser kann jedoch in gewissen Grenzen variiert werden, z. B. 0,22 bis 0,28 Mol Wasser pro NCO-Äquivalent, wobei entweder nur ein Teil der Isocyanatgruppen in Harnstoffdiisocyanate überführt wird, bzw. ein kleiner Teil der Harnstoffdiisocyanate weiter unter Harnstoffbildung reagiert. Es hat sich, wie in den Beispielen gezeigt wird, herausgestellt, daß zwar überwiegend die Bildung von Harnstoffdiisocyanaten erfolgt, daß jedoch gleichzeitig eine gewisse Weiterreaktion der Diisocyanate und/oder der Harnstoffdiisocyanate mit den höhermolekularen Polyolen b) erfolgt. Dies ist an dem verbleibenden NCO-Gehalt in den erfindungsgemäßen Dispersionen oder Lösungen erkennbar, der im allgemeinen unter dem theoretisch erwarteten Wert liegt. Hierdurch sind jedoch insbesonders die Dispersionen der Harnstoffgruppen enthaltenden Diisocyanate in den Polyolen gegen ein Sedimentieren geschützt, da sie durch die kleinen, über Urethangruppen gebundenen Polyolanteile besser dispergierbar bleiben.

Das erfindungsgemäße Verfahren wird vorzugsweise so durchgeführt, daß ein Gemisch aus dem Polyol, der berechneten Menge Wasser und dem spezifischen Katalysator bei der gewählten Reaktionstemperatur mit dem aromatischen Polyisocyanat versetzt wird. Die erfindungsgemäße Umsetzung erfolgt im allgemeinen im Temperaturbereich bis 80 °C, vorzugsweise bei etwa 10 bis 50 °C.

Der Reaktionsverlauf kann durch Bestimmung des Gasvolumens (Kohlendioxid-Entwicklung bei der Harnstoffbildung) leicht verfolgt und kontrolliert werden. Im Falle von schwerlöslichen Harnstoffdiisocyanaten fallen sie nach Überschreiten der Löslichkeitsgrenze in fein verteilter Form aus und man erhält vorwiegend sedimentationsstabile Dispersionen. Je nach Viskosität der Ausgangsmaterialien, sowie in Abhängigkeit von der Konzentration an sich bildendem Harnstoffdiisocyanat werden bei Raumtemperatur fließfähige, pastenförmige, oder durch Erwärmen auf maximal 80 °C verflüssigbare Dispersionen der Harnstoffdiisocyanate erhalten. Im allgemeinen werden bei Harnstoffpolyisocyanat-Konzentrationen bis 15 Gew.-% im Polyolgemisch noch flüssige, gießbare Dispersionen erhalten. Bei Anwendung von Polyolen höherer Polarität und daher besserer Lösefähigkeit für das sich in situ bildende Harnstoffpolyisocyanat werden gegebenenfalls Lösungen von Harnstoffpolyisocyanaten erhalten, bzw. die Ausbildung einer dispersen Phase erfolgt erst nach längerem Stehen oder durch Animpfen.

Die Reaktion des Wassers mit dem aromatischen Diisocyanat a) läuft im allgemeinen so vollständig ab, daß die entstehenden Suspensionen nur noch geringe Restmengen an freiem, nicht umgesetztem monomerem Diisocyanat a) enthalten (siehe Beispiele). Dies ist besonders bei Verwendung von Diisocyanaten a) mit relativ hohem Dampfdruck (z. B. Diisocyanatotoluol) in physiologischer Hinsicht bedeutsam. Man erhält so nach dem erfindungsgemäßen Verfahren Harnstoffdiisocyanatsuspensionen mit einem Gehalt an monomeren Diisocyanaten a) von $<$ 0,6 Gew.-% Diisocyanat, wenn man wenigstens die stöchiometrische Menge an Wasser (0,25 Mol $H_2O$ pro Äquivalent NCO) einsetzt.

Je nach eingesetztem Polyol sind die Dispersionen bis zu mehreren Tagen bei Raumtemperatur

haltbar, bis, durch Reaktion der Harnstoffpolyisocyanat-NCO-Gruppen mit dem Polyol b) eine Viskosität erreicht wird, die eine Verarbeitung nicht mehr erlaubt. Wie bereits erwähnt, können die erfindungsgemäß erhaltenen Harnstoffdiisocyanat-Dispersionen bzw. -Lösungen gegebenenfalls nach Zugabe weiterer, üblicher Polyurethankatalysatoren und gegebenenfalls nach Zusatz weiterer Di- oder Polyisocyanate und/oder niedermolekularer und/oder höhermolekularer Verbindungen mit reaktiven Wasserstoffatomen, d. h. Kettenverlängerungsmitteln auf der Basis von Diolen, Diaminen oder Hydrazidverbindungen bzw. höhermolekularen Polyolen oder höhermolekularen Polyaminen vorzugsweise unter Wärmezufuhr zu der Herstellung von Polyurethan(harnstoff)en verwendet werden. Hierbei reagieren die NCO-Gruppen des Harnstoffpolyisocyanats bei den erhöhten Temperaturen u. a. mit den OH-Gruppen des als Dispergiermittel wirkenden Polyols. Im allgemeinen erfolgt diese Aushärtung zu Polyurethanen bei Temperaturen von 80 bis 150 °C, besonders bevorzugt bei 110 bis 130 °C. Die Verwendung der erfindungsgemäß in situ hergestellten Harnstoffdiisocyanate in den Polyolen zur Herstellung von Polyurethan(harnstoff)en kann in verschiedenen Varianten der allgemeinen Ausführungsform erfolgen.

Wenn die NCO-Gruppen und die OH-Gruppen in den Polyolen in etwa äquivalenten Mengen vorhanden sind, kann eine Härtung zu Polyurethan(harnstoff)en durch thermisches Ausheizen in einfachster Form vorgenommen werden. Da jedoch die üblicherweise verwendeten Kettenverlängerungsmittel hier fehlen, werden nur relativ weiche, wenn auch bereits klebfreie Polyurethanelastomere erhalten.

Werden neben den Harnstoffdiisocyanat-Polyoldispersionen weitere niedermolekulare Kettenverlängerungsmittel mit aktiven Wasserstoffen, z. B. Diole, Polyole oder (aromatische) Diamine mitverwendet, so entstehen härtere Elastomertypen.

Es ist jedoch möglich, vorzugsweise in Mengen bis zu 20 Gew.-Teilen pro 100 Gew.-Teilen Isocyanat/Polyol-Dispersion, sowohl niedermolekulare Kettenverlängerungsmittel der genannten Art als auch höhermolekulare Verbindungen wie Polyole oder Polyamine, vorzugsweise aromatische Polyamine, wie sie z. B. durch alkalische Hydrolyse von NCO-Prepolymeren zugänglich sind, und gegebenenfalls weitere Di- und/oder Polyisocyanate zuzusetzen. Hierdurch kann der Aufbau der entstehenden Polyurethan(harnstoff)e in weiten Grenzen und bewußt den Erfordernissen entsprechend, variiert werden. In einer weiteren Abwandlung der Ausführungsform können Diisocyanatgruppen der Harnstoffdiisocyanat/Polyol-Dispersionen zunächst mit monofunktionellen Alkoholen (wie z. B. Methanol, Ethanol, Octanol, Monoaminen wie z. B. Ammoniak, Methylamin, Anilin, Toluidin, Naphthylamin, Diethylamin oder difunktionellen Verbindungen wie Diolen z. B. Ethylenglykol, Butandiol-1,4, Bisphenol-A teilweise oder vollständig umgesetzt werden). Bei Verwendung eines Überschusses der di- oder höherfunktionellen Verbindungen mit gleich-, vorzugsweise unterschiedlich reaktiven Gruppen z. B. Ethylenglykol, Butandiol oder mit Aminoalkoholen wie Ethanolamin, Diethanolamin oder N-Methylethanolamin, entstehen gegebenenfalls gegenüber Isocyanaten reaktionsfähige, Füllstoff-haltige Dispersionen in den Polyolen. Die nach diesen Verfahrensweisen mit mono- oder difunktionellen Verbindungen entstandenen Füllstoff-haltigen, gegebenenfalls gegenüber Isocyanaten reaktionsfähige Füllstoff-haltigen Polyoldispersionen können nach Zusatz weiterer Kettenverlängerungsmittel oder höhermolekularer Verbindungen wie Polyolen oder Polyaminen und unter Zusatz von weiteren Di- oder Polyisocyanaten zu Polyurethan(harnstoff)en umgesetzt werden. Diese Umsetzung erfolgt im allgemeinen im Temperaturbereich zwischen 80 und 150°, es werden — je nach Ausgangskomponenten, weiche bis harte Materialien erhalten.

Selbstverständlich können bei der Verwendung der Harnstoffdiisocyanat/Polyol-Dispersionen oder Lösungen als alleinige oder anteilige Aufbaukomponente zu Polyurethanen die bei Polyurethanen üblichen Katalysatoren, sowie Hilfs- und Zusatzstoffe verwendet werden. Dies sind etwa Licht oder UV-Stabilisatoren, Antihaftmittel, Pigmente oder Farbstoffe oder auch Treibmittel, welche die Herstellung von zelligen oder schaumstoffartigen Polyurethanen ermöglichen.

## Beispiel 1

Zu einem Gemisch aus 500 g eines auf 1,2-Propandiol gestarteten Propylenoxid-Polyethers der OH-Zahl 56, Molekulargewicht 2 000, (0,25 Mol)

4,5 g Wasser (0,25 Mol) und
0,5 g eines tert.-Amin-Katalysators (A-F, s. Tab. 1)

werden bei Raumtemperatur innerhalb von ca. 1 Stunde 87,0 g (0,5 Mol) 2,4-Toluylendiisocyanat getropft. Anschließend wird noch 1 Stunde bei Raumtemperatur und bis zu 1 Stunde bei 50 °C gerührt.

Tabelle 1 zeigt die gefundenen Ergebnisse in Abhängigkeit vom eingesetzten Katalysator. Bei selektiver Bildung des Toluylen-harnstoff-diisocyanates ohne Nebenreaktionen errechnet sich theoretisch ein NCO-Gehalt von 3,6 Gew.-% und die Entwicklung von 5,6 l $CO_2$ (unter Normalbedingungen).

Wie die Ergebnisse der Tabelle 1 zeigen, erfolgt in Probe A praktisch nur eine Reaktion der Hydroxylgruppen des Polyetherpolyols mit den reaktiveren der NCO-Gruppen, es tritt jedoch praktisch keine Wasserreaktion ein, wenn kein Katalysator verwendet wird. In der Probe B tritt mit dem nicht erfindungsgemäßen Katalysator sowohl eine katalysierte Wasserreaktion als auch eine katalysierte Hydroxylreaktion mit dem Polyether gleichzeitig ein, sodaß zwar die berechnete $CO_2$-Menge abgespalten,

jedoch der NCO-Gehalt der Dispersion weit über den theoretischen Wert hinaus abgebaut wird und die Dispersion selbst in Folge der polymeraufbauenden Reaktion mit beiden NCO-Gruppen sehr stark in der Viskosität ansteigt.

Auch mit dem nicht erfindungsgemäßen Katalysator gemäß Probe C tritt hauptsächlich eine Reaktion mit dem Polyetherhydroxyl unter Polymerverknüpfung und nur eine sehr geringe Harnstoffbildung (Wasserreaktion unter $CO_2$-Bildung) ein.

In den erfindungsgemäßen Proben D-F tritt durch die Wirkung der erfindungsgemäßen Katalysatoren eine sehr starke $CO_2$-Entwicklung, daß heißt Harnstoffbildung, ein, ohne daß die Viskosität der Dispersion wesentlich ansteigt. Dies zeigt, daß zu untergeordneten Anteilen eine NCO/Hydroxylgruppen-Reaktion eingetreten ist. Die erfindungsgemäßen Dispersionen D-F zeigen eine gute Stabilität der Dispersion. Nach einer gaschromatografischen Analyse enthält Probe F weniger als 0,03 Gew.-% an freiem 2,4-Toluylendiisocyanat.

Tabelle 1

| Probe | | Katalysator | NCO-Gehalt der Dispersion | Viskosität (m Pa.s/$_{25°C}$) | entwickelte $CO_2$-Menge* |
|---|---|---|---|---|---|
| A | nicht erfindungsgemäß | ohne | 3,40 Gew.-% | 2000 | 0 |
| B | nicht erfindungsgemäß | Triethylendiamin 33%ige Lösung | 1,1 Gew.-% | 40 000 | 5,7 1 |
| C | nicht erfindungsgemäß | 1-Dimethylamino-propanol-3 | 2,6 Gew.-% | 22 000 | 0,3 1 |
| D | erfindungsgemäß | Bis(dimethylaminoethyl)ether | 1,8 Gew.-% | 6000 | 6,3 1 |
| E | erfindungsgemäß | Pentamethyl-diethylentriamin | 2,1 Gew.-% | 5000 | 5,9 1 |
| F | erfindungsgemäß | Heptamethyl-tetraethylenpentamin | 2,5 Gew.-% | 3200 | 5,5 1 |

* Werte nicht auf Normalbedingungen korrigiert

Beispiel 2

Zu einem Gemisch aus

500 g eines Polyethers (Polyethervariationen s. Tabelle 2)
4,5 g (0,25 Mol) Wasser und
0,5 g Heptamethyl-tetraethylen-pentamin

werden bei Raumtemperatur innerhalb 1 Stunde 87,0 g (0,5 Mol) 2,4-Toluylen-diisocyanat getropft.

Anschließend wird noch 1/2-1 Stunde bei Raumtemperatur und bis zu 1 Stunde bei 50 °C gerührt.

Tabelle 2 zeigt die gefundenen Ergebnisse in Abhängigkeit vom eingesetzten höhermolekularen Polyetherpolyol.

Es zeigt sich, daß im erfindungsgemäßen Verfahren auch höherfunktionelle Polyole eingesetzt werden können, daß sich zur Herstellung der Dispersion im Allgemeinen sekundäre Hydroxylgruppen aufweisende Polyole besser als primäre eignen und daß der Anteil von Ethylenoxyd in blockartiger Form innerhalb der Polyether eine höhere Löslichkeit für das Harnstoff-diisocyanat bringt.

(Siehe Tabelle 2 Seite 8 f.)

Tabelle 2

| Polyether | OH-Zahl | Molekular-gewicht | Funktio-nalität | NCO-Gehalt der Harnstoff-diisocyanat/Polyol-Mischung | Zustand der Harnstoff-diisocyanat/Polyol-Mischung | Viskosität der Harnstoff-diisocyanat/Polyol-Mischung |
|---|---|---|---|---|---|---|
| A PG ← PO | 56 | 2000 | 2 | 2,5 Gew.-% | Dispersion | 3200 (in mPa.s/25°C) |
| B PG ←(79%) PO \| ←(21%) EO | 28 | 4000 | 2 | 2,6 Gew.-% | Dispersion | 400 000 |
| C {TMP+PG} ←(5%) PO \| ←(30% EO / 39,5% PO) \|\| ←(25,5PO) | 42 | 3700 | 2,78 | 3,5 Gew.-% | Dispersion | 4500 |
| D {TMP+PG} ← PO | 56 | 2900 | 2,91 | 2,5 Gew.-% | Dispersion | 15 000 |
| E PG ← PO | 41 | 2740 | 2 | 3,6 Gew.-% | Dispersion | 3500 |
| F PG ← PO | 75 | 1500 | 2 | 2,5 Gew.-% | Dispersion | 3500 |
| G PG ←(47,5%PO) \| ←(43%EO) \|\| ←(10%PO) | 56 | 2000 | 2 | 2.2 Gew.-% | Lösung | 2400 |
| H PG ←(3%PO) \| ←{30%EO / 57%PO} \|\| ←(10%EO) | 56 | 2000 | 2 | 1,8 Gew.-% | Lösung | 9000 |

PG = 1,2-Propylenglykol
TMP = Trimethylolpropan
← Alkoxylierungsreaktion
I ← zweite Alkoxylierungsstufe
II ← dritte Alkoxylierungsstufe
PO = Propylenoxid
EO = Ethylenoxid

Beispiel 3

Zu einem Gemisch aus

500 g eines linearen Polypropylenglykolpolyethers der OH-Zahl 56
2,25 g (0,125 Mol) Wasser und
0,25 g Heptamethyltetraethylenpentamin

werden innerhalb von ca. 1 Stunde bei Raumtemperatur 64,75 g (0,25 Mol) eines Gemisches aus

60 Gew.-% 2,4′ und
40 Gew.-% 4,4′-Diisocyanatodiphenylmethan

getropft. Es wird bei 50 °C nachgerührt bis 2,7 l $CO_2$ entwichen sind.

Die erhaltene Dispersion hat einen NCO-Gehalt von 1,5 Gew.-% und eine Viskosität von 4 600 mPa · s/25 °C.

Beispiel 4

Eine Probe der in Beispiel 2C hergestellten Dispersion wird in einer flachen Form 1,5 Stunden auf 120 °C erhitzt. Es wird ein weicher klebfreier Kunststoff mit einer Oberflächenhärte von 55 Shore A erhalten.

Beispiel 5

A) Die in Beispiel 2A erhaltene Dispersion wird mit 19,61 g Ethylenglykol versetzt und bei 50 °C gerührt, bis alle NCO-Gruppen umgesetzt sind. Es wird eine Dispersion mit einer Viskosität von 11 000 mPa.s/25 °C erhalten. OH-Zahl berechnet : 59,1

B) 1 105 g einer nach Beispiel 2A hergestellten Dispersion mit einem NCO-Gehalt von 2,4 Gew.-% werden mit 57,2 g Butandiol-1,4 versetzt und bei 50 °C gerührt, bis alle NCO-Gruppen umgesetzt sind. Es wird eine Dispersion mit einer Viskosität von 250 000 mPa.s/25 °C erhalten.

C) 200 g der nach Beispiel 2G erhaltenen Dispersion werden mit 5,38 g Ethylenglykol versetzt und bei 50 °C gerührt, bis alle NCO-Gruppen umgesetzt sind. Es wird eine klare, gelbliche Lösung mit einer Viskosität von 25 000 mPa · s/25 °C erhalten.

D) 250 g der in Beispiel 2A erhaltenen Dispersion werden mit 15,0 g Diethanolamin versetzt und 5 Stunden bei Raumtemperatur gerührt. Es wird eine Dispersion mit einer Viskosität von 5 000 mPa · s erhalten.

Beispiel 6

Zu einem Gemisch aus

500 g eines Diethylenglykol-Adipinsäure-Polyesters der OH-Zahl 41,2, Säurezahl 0,8,
4,5 g (0,25 Mol) Wasser und
0,5 g Heptamethyltetraethylenpentamin

werden bei Raumtemperatur innerhalb von ca. 1 Stunde 87,0 g (0,5 Mol) 2,4-Toluylendiisocyanat getropft. Anschließend wird noch ca. 30 Minuten bei 50 °C gerührt. Es werden insgesamt 5,4 l $CO_2$ entwickelt.

Man erhält eine hochviskose Dispersion, mit einem NCO-Gehalt von 1,8 Gew.-%, die allmählich bei Raumtemperatur verfestigt.

Wird eine Probe dieser Dispersion auf 120 °C erhitzt, so erhält man nach ca. 30 Minuten einen klebfreien, hochelastischen Weichschaum.

Beispiel 7

Zu einem Gemisch aus

1 000 g eines linearen Polypropylenglykolpolyethers der OH-Zahl 56
9 g Wasser (0,5 Mol) und
1,0 g Heptamethyltetraethylenpentamin

werden innerhalb von ca. 2,5 h bei Raumtemperatur 174 g (1 Mol) 2,4-Toluylendiisocyanat getropft. Anschließend wird bis zur Entwicklung von 11,2 l $CO_2$ bei 40 °C nachgerührt.

Es wird eine Dispersion mit einem NCO-Gehalt von 2,74 Gew.-% erhalten.

500 g der Dispersion werden mit 29,25 g Butandiol bei Raumtemperatur versetzt und bei 40-50 °C gerührt, bis alle NCO-Gruppen umgesetzt sind.

Dispersion A 11 000 mPa.s bei Raumtemperatur.

Zu 500 g der Dispersion werden 34,125 g Diethanolamin unter Kühlung getropft. Anschließend wird gerührt, bis alle NCO-Gruppen umgesetzt sind.

Dispersion B 8 000 mPa · s bei Raumtemperatur.

50 Teile der Dispersion A werden mit 8,9 Teilen flüssigem 4,4'-Diisocyanatodiphenylmethan versetzt, bei 50 °C ca. 5 min. entgast und in einer Form bei 120 °C ausgeheizt. Nach ca. 6 h erhält man eine klebfreie Platte mit einer Oberflächenhärte von 25 Shore A.

50 Teile der Dispersion B werden mit 12,6 Teilen flüssigem 4,4'-Diisocyanatodiphenylmethan versetzt, bei 50 °C ca. 5 min entgast und in einer Plattenform 6 h bei 120 °C ausgeheizt. Man erhält eine elastische Platte mit einer Oberflächenhärte von 75 Shore A.

Beispiel 8 : (Vergleichsversuch, in niedermolekularem Lösungsmittel (Aceton) anstelle von höhermolekularen Polyolen durchgeführt)

Zu einem Gemisch aus 180 ml Aceton und 43,5 g 2,4-Toluylendiisocyanat (0,25 Mol) wird bei Raumtemperatur ein Gemisch aus 2,25 g Wasser (0,125 Mol), 10 ml Aceton und 0,2 g N-Heptamethyltetraethylenpentamin gegeben. Anschließend wird noch 3 Stunden bei Raumtemperatur gerührt. Nach dem Absaugen und Trocknen erhält man 40,5 g eines Feststoffes mit einem Fp. von ca. 250 °C und einem NCO-Gehalt von nur 7,5 Gew.-%.

Es werden zwar hohe Ausbeuten an Harnstoffdiisocyanat erhalten, doch besitzt das Produkt nur einen geringen NCO-Gehalt, da die Additionsreaktion mit Wasser nicht auf der Stufe des Monoharnstoffs stehen bleibt, sondern zur oligomeren Stufe mit erheblich vermindertem NCO-Gehalt und höherem Molekulargewicht bzw. verminderter Löslichkeit, weiterläuft.

**Patentansprüche**

1. Verfahren zur in situ-Herstellung von Dispersionen oder Lösungen von Harnstoffgruppen enthaltenden aromatischen Polyisocyanaten durch Umsetzung von aromatischen Diisocyanaten mit Wasser in Lösungsmitteln, dadurch gekennzeichnet, daß man

a) aromatische Di- und/oder Polyisocyanate in

b) höhermolekularen, flüssigen oder unter 50 °C schmelzenden, zwei- oder mehrwertigen Polyolen mit Molekulargewichten von 400 bis 10 000 mit

c) 0,15 bis 0,40 Mol Wasser, bezogen auf Gesamt-NCO-Äquivalente in a) in Gegenwart von

d) 0,1 bis 2,5 Gew.-%, bezogen auf aromatische Polyisocyanate an die NCO/Wasser-Reaktion stärker als die NCO-Hydroxyl-Reaktion beschleunigenden Katalysatoren aus der Reihe der Peralkylamino-alkylether, Peralkylamino-polyalkylenether und/oder Peralkyl-polyalkylenpolyamine einsetzt und man die Diisocyanate in flüssigen Polyolen b) bei Temperaturen bis 50 °C bis zur Beendigung der $CO_2$-Abspaltung umsetzt.

2. Verfahren nach Anspruch 1, dadurch gekennzeichnet, daß man als a) aromatische Diisocyanate mit unterschiedlicher Reaktivität der NCO-Gruppen umsetzt.

3. Verfahren nach Ansprüchen 1 und 2, dadurch gekennzeichnet, daß man als b) flüssige oder unter 50 °C schmelzende Polyole auf Polyetherbasis mit überwiegend sekundären Hydroxylgruppen und Molekulargewichten von 600 bis 6 000 umsetzt.

4. Verfahren nach Ansprüchen 1 bis 3, dadurch gekennzeichnet, daß man 0,22 bis 0,28 Mol Wasser pro NCO-Äquivalent in a) umsetzt.

5. Durch in situ-Reaktion nach Ansprüchen 1 bis 4 hergestellte Dispersionen oder Lösungen von Harnstoffgruppen enthaltenden aromatischen Polyisocyanaten in höhermolekularen, flüssigen oder unter 50 °C schmelzenden Polyolen mit Molekulargewichten von 400 bis 10 000 und einem Gehalt an freien NCO-Gruppen von 0,1 bis 10 % NCO, vorzugsweise 1-5 % NCO.

6. Verwendung der durch in situ-Herstellung nach Verfahren 1 bis 4 zugänglichen Dispersionen oder Lösungen von Harnstoffgruppen enthaltenden aromatischen Polyisocyanaten in flüssigen oder unter 50 °C schmelzenden, höhermolekularen Polyolen mit Molekulargewichten von 400 bis 10 000, gegebenenfalls unter weiterem Zusatz von niedermolekularen und/oder höhermolekularen, gegenüber NCO reaktive Gruppen mit reaktivem Wasserstoff, insbesondere Hydroxyl-, primäre und sekundäre Aminogruppen und/oder Hydrazidgruppen aufweisenden, vorzugsweise di- und/oder höherfunktionellen Verbindungen und gegebenenfalls unter Zusatz von weiteren Polyisocyanaten, in Polyurethan-bildenden Verhältnissen, vorzugsweise in Verhältnissen von NCO zu Gruppen mit reaktivem Wasserstoff zwischen 0,7 : 1 bis 1,3 : 1 insbesondere 0,9 : 1 bis 1,15 : 1, zur Herstellung von Polyurethan(harnstoff)en.

**Claims**

1. Process for the in situ production of dispersions or solutions of aromatic polyisocyanates containing urea groups by reacting aromatic diisocyanates with water in solvents, characterised in that

a) aromatic di- and/or polyisocyanates in

b) relatively high molecular weight di- or polyhydric polyols which are liquid or melt at below 50 °C and have molecular weights of 400 to 10 000, are used together with

c) 0.15 to 0.40 mols of water, based on the total NCO equivalents in a) in the presence of

d) 0.1 to 2.5 % by weight, based on aromatic polyisocyanates, of catalysts, which accelerate the NCO/water reaction to a greater extent than the NCO/hydroxyl reaction, from the series comprising peralkylamino alkyl ethers, peralkylamino polyalkylene ethers and/or peralkyl polyalkylene polyamines and the diisocyanates are reacted in liquid polyols b) at temperatures of up to 50 °C until the evolution of $CO_2$ has ended.

2. Process according to Claim 1, characterised in that aromatic diisocyanates of which the NCO groups differ in their reactivity are reacted as a).

3. Process according to Claims 1 and 2, characterised in that polyols which are based on polyethers, contain predominantly secondary hydroxyl groups, have molecular weights of 600 to 6 000 and are liquid or melt at below 50 °C are reacted as b).

4. Process according to Claims 1 to 3, characterised in that 0.22 to 0.28 mols of water are reacted per NCO equivalent in a).

5. Dispersions or solutions of aromatic polyisocyanates containing urea groups in relatively high molecular weight polyols which are liquid or melt at below 50 °C, having molecular weights of 400 to 10 000 and a content of free NCO groups of 0.1 to 10 % of NCO, preferably 1-5 % of NCO, which dispersions or solutions are produced by the in situ reaction according to Claims 1 to 4.

6. Use of the dispersions or solutions, which may be obtained by the in situ production according to processes 1 to 4, of aromatic polyisocyanates containing urea groups in relatively high molecular weight polyols which are liquid or melt at below 50 °C and have molecular weights of 400 to 10 000, optionally with the further addition of low molecular weight and/or relatively high molecular weight, preferably di- and/or higher functional compounds containing groups containing reactive hydrogen which are reactive towards NCO, in particular hydroxyl, primary and secondary amino groups and/or hydrazide groups, and optionally with the addition of further polyisocyanates, in polyurethane-forming ratios, preferably in ratios of NCO to groups containing reactive hydrogen of between 0.7 : 1 to 1.3 : 1, in particular 0.9 : 1 to 1.15 : 1, for the production of polyurethane(urea)s.

**Revendications**

1. Procédé de fabrication in situ de dispersions ou de solutions de polyisocyanates aromatiques contenant des groupes urée par réaction de diisocyanates aromatiques avec de l'eau dans des solvants, caractérisé en ce qu'on utilise

a) des di- et/ou polyisocyanates aromatiques dans

b) des polyols di- ou polyvalents à poids moléculaire élevé, liquides ou fondant au-dessous de 50 °C et ayant des poids moléculaires de 400 à 10 000, avec

c) 0,15 à 0,40 mole d'eau par rapport aux équivalents totaux en NCO dans a), en présence de

d) 0,1 à 2,5 % en poids, par rapport aux polyisocyanates aromatiques, de catalyseurs accélérant plus fortement la réaction NCO/eau que la réaction NCO/hydroxyle, lesquels appartiennent à la série des peralcoylamino-alcoyl-éthers, peralcoylamino-polyalcoylène-éthers et/ou peralcoyl-polyalcoylène-polyamines et en ce qu'on fait réagir les diisocyanates dans les polyols liquides b) à des températures allant jusqu'à 50 °C, jusqu'à achèvement du dégagement de $CO_2$.

2. Procédé selon la revendication 1, caractérisé en ce qu'on fait réagir en tant que a) des diisocyanates aromatiques dont les groupes NCO présentent une réactivité différente.

3. Procédé selon les revendications 1 et 2, caractérisé en ce qu'en tant que b) on fait réagir des polyols liquides ou fondant au-dessous de 50 °C à base de polyéthers avec prépondérance de groupes hydroxyle secondaires et des poids moléculaires de 600 à 6 000.

4. Procédé selon les revendications 1 à 3, caractérisé en ce qu'on fait réagir 0,22 à 0,28 mole d'eau par équivalent NCO dans a).

5. Dispersions ou solutions, préparées in situ selon les revendications 1 à 4, de polyisocyanates aromatiques contenant des groupes urée dans des polyols à poids moléculaire élevé liquides ou fondant au-dessous de 50 °C qui présentent des poids moléculaires de 400 à 10 000 et une teneur en groupes NCO libres de 0,1 à 10 % de NCO, de préférence de 1 à 5 % de NCO.

6. Utilisation des dispersions ou solutions, accessibles par préparation in situ selon les procédés 1 à

4, de polyisocyanates aromatiques contenant des groupes urée dans des polyols à poids moléculaire élevé, liquides ou fondant au-dessous de 50 °C, ayant des poids moléculaires de 400 à 10 000, éventuellement avec une addition supplémentaire de composés de préférence di- et/ou polyfonctionnels à poids moléculaire inférieur et/ou à poids moléculaire élevé, qui présentent des groupes réactifs envers les NCO avec hydrogène réactif, en particulier des groupes hydroxyle, amino primaires et secondaires et/ou hydrazide et éventuellement avec une addition d'autres polyisocyanates dans des proportions conduisant à la formation de polyuréthanes, de préférence dans des proportions des NCO envers les groupes à hydrogène réactif comprises entre 0,7 : 1 et 1,3 : 1, en particulier de 0,9 : 1 à 1,15 : 1, en vue de la fabrication de polyuréthane(urée)s.